# EUROPEAN PATENT APPLICATION

(11) **EP 4 606 947 A1**
(43) Date of publication of application: **27.08.2025**
(21) Application number: 23879386.3
(22) Date of filing: 06.06.2023
(51) Int. Cl.: D07B 1/06, F16L 11/08, G01N 3/08

(54) **STEEL WIRE, MARINE HOSE, AND METHOD FOR EVALUATING BENDING PERFORMANCE OF STEEL WIRE**

(30) Priority: 20.10.2022 JP 2022168298
(71) Applicant: The Yokohama Rubber Co., Ltd., Hiratsuka-shi, Kanagawa 254-8601 (JP)
(72) Inventor: SUEFUJI Ryotaro, Hiratsuka-shi, Kanagawa 254-8601 (JP)
(74) Representative: Grünecker Patent- und Rechtsanwälte PartG mbB
(86) International application number: PCT/JP2023/020965
(87) International publication number: WO 2024/084732

(57) **Abstract**

Provide are a large-diameter steel having excellent bending performance, a marine hose including the steel wire, and an evaluation method that can easily grasp the bending performance of a steel wire. A steel wire (6w) that is single and has an outer diameter of 5 mm or more is held by a pair of holding tools (11) at specified spacing (L) from each other in the longitudinal direction, a tensile test is performed, and the bending performance of the steel wire (6w) is evaluated based on a comparison between the value of a reduction (R) of the steel wire (6w) that has been broken and a preset reference value (Rx). The specified spacing (L) is 30 mm, the tensile speed is 50 mm/min, the temperature is room temperature, the reduction (R) (%) is a value calculated by {(S0 - S1)/S1} × 100, S0 is the cross-sectional area of the steel wire (6w) before the tensile test, and S1 is the cross-sectional area of a broken surface of the steel wire (6w) after the tensile test.

## Description

### Technical Field

The present invention relates to a steel wire, a marine hose including the steel wire, and a method for evaluating the bending performance of a steel wire.

### Background Art

Single steel wires are used in a variety of applications. In a product in which the steel wire is used, various performances are required for the steel wire according to the characteristics of the product. In general, a steel wire is required to have tensile strength. However, in hoses such as marine hoses, for example, a steel wire may be required to have predetermined bending performance (see Non-Patent Literature 1, for example).

As the outer diameter of the steel wire increases, the bending rigidity increases. Therefore, a bending tester for evaluating the bending performance of a large-diameter steel wire having an outer diameter of 5 mm or more, for example, needs to be made correspondingly robust to improve the durability. However, since the demand for the bending test is smaller than that for the tensile test, the number and types of bending testers for such a large-diameter steel wire are extremely limited, and there is room for improvement in easily grasping the bending performance.

### Citation List

### Non-Patent Literature

Non-Patent Document 1: British Standard, Steel wire for hose reinforcement, BS 3592: Part 1: 1986

### Summary of Invention

### Technical Problem

An object of the present invention is to provide a large-diameter steel wire having excellent bending performance, a marine hose in which the steel wire is used, and an evaluation method that can easily grasp the bending performance of a steel wire.

### Solution to Problem

In order to achieve the above object, the present invention provides a steel wire that is single and has an outer diameter of 5 mm or more, a reduction of the steel wire held by a pair of holding tools at specified spacing from each other in a longitudinal direction and broken in a tensile test performed under conditions below being 37% or more:
the specified spacing is 30 mm, a tensile speed is 50 mm/min, a temperature is room temperature, the reduction (%) is a value calculated by {(S0 - S1)/S1} × 100, S0 is a cross-sectional area (mm) of the steel wire before the tensile test, and S1 is a cross-sectional area (mm) of a broken surface of the steel wire after the tensile test.

The present invention provides a marine hose in which the steel wire described above set to have specifications, in which an outer diameter of the steel wire is 15 mm or less and a tensile strength of the steel wire in the tensile test is 900 MPa or more and 1300 MPa or less, is embedded as a reinforcing wire to extend spirally on an outer circumferential side of a flow path.

The present invention provides a method for evaluating bending performance of a steel wire that is single and has an outer diameter of 5 mm or more, the method including holding the steel wire using a pair of holding tools at specified spacing from each other in a longitudinal direction, performing a tensile test under conditions below, and evaluating the bending performance of the steel wire on a basis of a comparison between a value of a reduction of the steel wire that has been broken and a preset reference value:
the specified spacing is 30 mm, a tensile speed is 50 mm/min, a temperature is room temperature, the reduction (%) is a value calculated by {(S0 - S1)/S1} × 100, S0 is a cross-sectional area (mm) of the steel wire before the tensile test, and S1 is a cross-sectional area (mm) of a broken surface of the steel wire after the tensile test.

### Advantageous Effects of Invention

According to the steel wire of the present invention, since the value of the reduction obtained by the tensile test under the above-described conditions is highly correlated with the bending performance, it can be estimated that the steel wire has a certain degree of tenacity (toughness) and has excellent bending performance when the reduction is 37% or more. Therefore, by adopting these specifications, a large-diameter steel wire having excellent bending performance can be obtained.

According to the marine hose of the present invention, a steel wire having an outer diameter of 5 mm or more and 15 mm or less, having excellent bending performance, and having a tensile strength of 900 MPa or more and 1300 MPa or less is embedded as a reinforcing wire to extend spirally on the outer circumferential side of the flow path. As a result, a predetermined bending performance required for the marine hose can be stably ensured.

According to the method for evaluating the bending performance of a steel wire of the present invention, since the value of the reduction obtained by the tensile test under the above-described conditions is highly correlated with the bending performance, the bending performance of the steel wire can be evaluated based on a comparison between the value of the reduction of the steel wire that has been broken and a preset reference value. That is, in order to evaluate the bending performance, a tensile test may be performed instead of a bending test, and thus the bending performance of the steel wire can be easily grasped.

### Brief Description of Drawings

FIG. 1 is an explanatory diagram illustrating a marine hose according to an embodiment.
FIG. 2 is an explanatory diagram illustrating an upper half around one end portion in a longitudinal direction of the marine hose in FIG. 1 enlarged in a longitudinal cross-sectional view.
FIG. 3 is an explanatory diagram illustrating a transverse cross-sectional structure of the marine hose in a cross-sectional view taken along A-A of FIG. 2.
FIG. 4 is an explanatory diagram illustrating a bending tester for a steel wire.
FIG. 5 is an explanatory diagram illustrating a tensile tester for a steel wire.
FIG. 6 is an explanatory view illustrating a steel wire broken by the tensile test.
FIG. 7 is a graph schematically illustrating the correlation between the superiority or inferiority of the bending performance of the steel wire and the value of the reduction.

### Description of Embodiments

A steel wire, a marine hose, and a method for evaluating the bending performance of a steel wire according to the present invention will be described below with reference to an embodiment illustrated in the drawings.

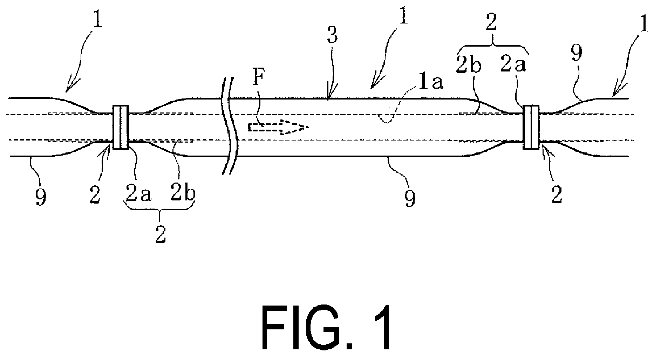

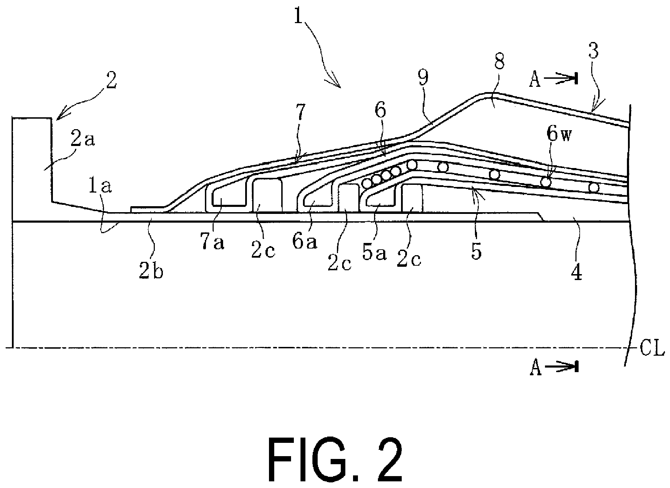

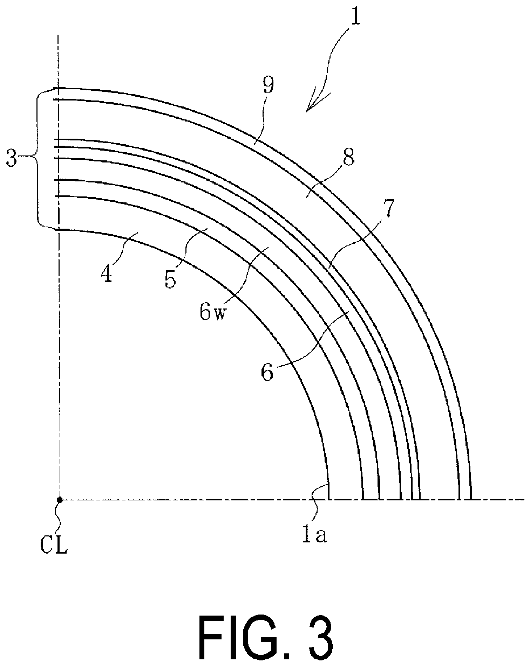

In a marine hose 1 according to an embodiment illustrated in FIGS. 1 to 3, a steel wire 6w according to the present invention is used. The marine hose 1 includes a cylindrical main hose body 3 and connecting end portions 2 connected to both end portions of the main hose body 3 in the longitudinal direction. The connecting end portion 2 includes a nipple 2b extending in the longitudinal direction of the marine hose 1 and a flange 2a joined to one end of the nipple 2b in the longitudinal direction. For example, about eight pieces or more and ten-some pieces or less of the marine hoses 1 are typically used with their respective connecting end portions 2 connected to each other. A dot-dash line CL in the drawings is a center line extending in a hose longitudinal direction through the cross-sectional center of the marine hose 1. Although FIG. 3 illustrates a range of one-quarter of the transverse cross-section of the marine hose 1, the other range not illustrated (a range of three-quarters) also has the same structure.

In the main hose body 3 extending between the respective connecting end portions 2, an inner surface layer 4, an inner first reinforcing layer group 5, the steel wire 6w, an inner second reinforcing layer group 6, an outer reinforcing layer group 7, a buoyant layer 8, and a cover layer 9 are coaxially layered in this order from an inner circumferential side around a flow path 1a having a cylindrical shape (that is, around a center line CL). The inner first reinforcing layer group 5, the inner second reinforcing layer group 6, and the outer reinforcing layer group 7 are fixed to the nipple 2b by nipple wires 5a, 6a, and 7a at respective one end portions and fixing rings 2c disposed so as to project from the outer circumferential surface of the nipple 2b.

The inner circumferential surface of the inner surface layer 4 constitutes the flow path 1a for a fluid F. Examples of the fluid F can include crude oil, gasoline, and LPG. An appropriate material is used for the inner surface layer 4 according to the type of the fluid F. In a case where the fluid F is crude oil or the like, the inner surface layer 4 is formed of nitrile rubber or the like having an excellent oil resistance.

The inner first reinforcing layer group 5 includes a plurality of cord reinforcing layers layered. The number of cord reinforcing layers is appropriately set to the required number, for example, about four or more and thirty or less. Each of the cord reinforcing layers includes a large number of rubber-coated reinforcing cords arranged side by side.

In each of the cord reinforcing layers, the large number of reinforcing cords extend inclined at a predetermined angle with respect to the center line CL. The reinforcing cords of the cord reinforcing layers layered vertically adjacent to each other are disposed with inclination directions of the reinforcing cords being opposite to each other. The reinforcing cord to be used includes a resin fiber cord made from polyester, polyketone, aramid, vinylon, nylon, or the like or a steel cord, which is usually used in the marine hose.

Each of the cord reinforcing layers is covered with a thin rubber layer for adhesion, and the cord reinforcing layers adjacently layered are bonded with the thin rubber layer interposed therebetween. The inner circumferential surface of the inner first reinforcing layer group 5 and the outer circumferential surface of the inner surface layer 4 are bonded in contact with each other.

The steel wire 6w is spirally wound around the outer circumferential surface of the inner first reinforcing layer group 5. The steel wire 6w is a single large-diameter wire having an outer diameter of 5 mm or more, and the upper limit of the outer diameter is 15 mm, for example. When the steel wire 6w is used as a reinforcing wire in a product other than the marine hose 1, the outer diameter of the steel wire 6w may be larger than 15 mm (about 20 mm or more and 30 mm or less, for example).

The steel wire 6w is also covered with a rubber layer for adhesion. The outer circumferential surface of the inner first reinforcing layer group 5 and the outer circumferential surface of the steel wire 6w are bonded in contact with each other. The steel wire 6w can also be disposed in the inner first reinforcing layer group 5. The steel wire 6w is provided mainly to ensure the required bending rigidity of the marine hose 1 (main hose body 3).

The steel wire 6w is manufactured by a known method. Specifically, a carbon steel wire is hot-rolled and drawn to obtain the steel wire 6w having a desired outer diameter. By adjusting the cooling rate of the wire in the hot rolling, the value of reduction R (%) of the steel wire 6w, the tensile strength, and the like can be changed. The specifications of the steel wire 6w will be described in detail below.

The inner second reinforcing layer group 6 and the outer reinforcing layer group 7 each have substantially the same structure as the structure of the inner first reinforcing layer group 5 and include a plurality of cord reinforcing layers layered. The inner circumferential surface of the inner second reinforcing layer group 6 and the outer circumferential surface of the steel wire 6w are bonded in contact with each other. The outer reinforcing layer group 7 is a reinforcing layer that supports the inner reinforcing layer groups 5 and 6, and resists an impact force (internal pressure) generated in the marine hose 1 when the inner reinforcing layer groups 5 and 6 are damaged. The inner circumferential surface of the outer reinforcing layer group 7 and the outer circumferential surface of the inner second reinforcing layer group 6 are bonded in contact with each other.

The buoyant layer 8 is formed of a material that exhibits buoyancy to float the marine hose 1 on the sea, such as sponge rubber or polyurethane foam. The layer thickness of the buoyant layer 8 (layer thickness of a portion other than both end portions in the longitudinal direction) varies depending on, for example, the size of and the buoyancy required for the marine hose 1 and is, for example, about 60 mm or more and 300 mm or less. The outer circumferential surface of the outer reinforcing layer group 7 and the inner circumferential surface of the buoyant layer 8 are bonded in contact with each other. The marine hose 1 according to the embodiment is of a floating type and thus includes the buoyant layer 8. However, in the case of the marine hose 1 of a submarine type, the buoyant layer 8 is omitted.

The cover layer 9 may be formed of a non-water-permeable material, such as rubber, and have a line pattern or the like having excellent visibility on its surface. The outer circumferential surface of the buoyant layer 8 and the inner circumferential surface of the cover layer 9 are bonded in contact with each other.

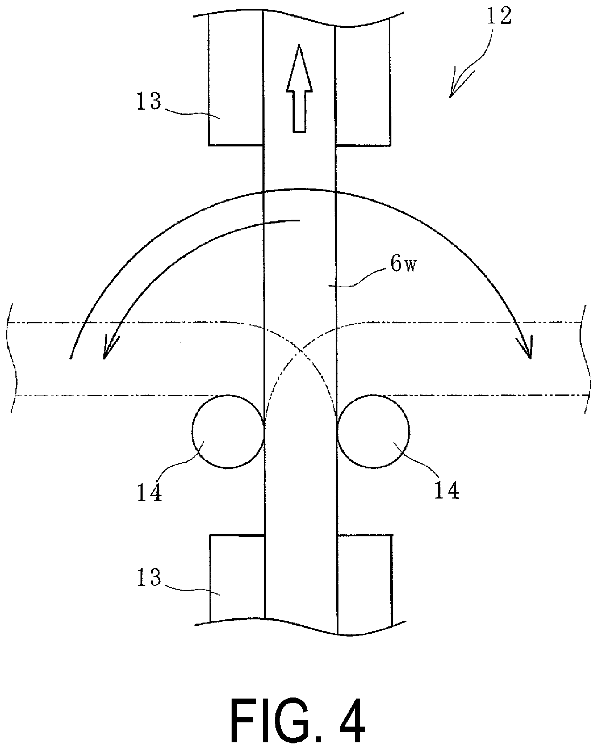

When the steel wire 6w is used as a reinforcing wire for the marine hose 1 as described above, the steel wire 6w is required not only to have tensile strength but also to have bending performance. For example, in BS 3592: Part 1: 1986 mentioned as Non-Patent Document 1, the bending performance of the steel wire 6w is evaluated based on the result of a bending test by a bending tester 12 illustrated in FIG. 4 (hereinafter referred to as a specified bending test). In the specified bending test, in a state where the steel wire 6w is held between holding tools 13, 13, the steel wire 6w is bent 90° to one side in the left-right direction using a bending portion 14 disposed on one side in the left-right direction as a fulcrum, and then bent 90° to the other side in the left-right direction using the bending portion 14 disposed on the other side in the left-right direction as a fulcrum. That is, one holding tool 13 holding the steel wire 6w is turned by 90° to one side in the left-right direction, and then turned by 180° to the opposite side, as indicated by the arrows in the drawing. When the appearance of the steel wire 6w bent once to each of the left and right sides is observed, the bending performance is determined to be poor and unacceptable when a crack or a wire breakage occurs, and the bending performance is determined to be excellent and acceptable when no crack or wire breakage occurs in the appearance. When the tensile strength of the steel wire 6w is 900 MPa or more and 1100 MPa or less and the outer diameter thereof is 5.0 mm or more and 8.0 mm or less, the radius of the bending portion 14 is 15.0 mm. When the tensile strength of the steel wire 6w is 1100 MPa or more and 1300 MPa or less and the outer diameter thereof is 8.0 mm or more and 14.22 mm or less, the radius of the bending portion 14 is 25.0 mm.

There are not many bending testers 12 capable of evaluating the bending performance of a large-diameter steel wire 6w having an outer diameter of 5 mm or more. In addition, since an excessive load is applied to the bending tester 12 every time the test is performed, the cost is increased to make the bending tester 12 robust, and the maintenance thereof requires a significant cost. That is, it is currently difficult to easily grasp the bending performance of the large-diameter steel wire 6w.

Thus, the present invention has been created by studying various measures for accurately obtaining an evaluation result by the specified bending test by an alternative test method of the specified bending test. In the present invention, an evaluation result can be easily obtained using many existing tensile testers.

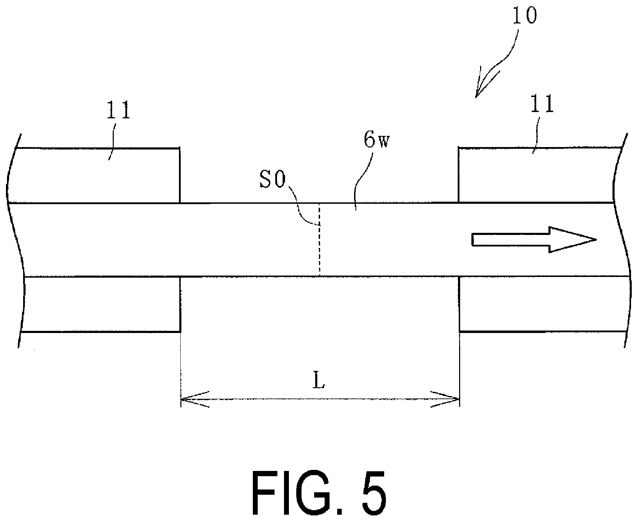

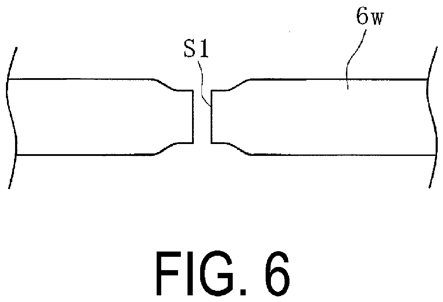

A tensile test is performed with the steel wire 6w held by a pair of holding tools 11, 11 of a tensile tester 10 illustrated in FIG. 5 at specified spacing L from each other in the longitudinal direction. The value of the reduction R of the steel wire 6w broken as illustrated in FIG. 6 by this tensile test is grasped. The tensile test is performed in accordance with the tensile test method for metal materials of JIS Z2241, and the test conditions are as follows: the specified spacing L is 30 mm, the tensile speed is 50 mm/min, and the temperature is room temperature (10°C or more and 35°C or less). The reduction R (%) is a value calculated by {(S0 - S1)/S1} × 100. S0 is the cross-sectional area (mm) of the steel wire 6w before the tensile test, and S1 is the cross-sectional area (mm) of the broken surface of the steel wire 6w after the tensile test.

Annex C of JIS Z2241 specifies that the spacing between grips of a test piece in a tensile test is 150 mm or more for No. 9A and 250 mm or more for No. 9B. In this embodiment, however, the specified spacing L is set to be very small at 30 mm. It was found that when the value of the reduction R (%) of the steel wire 6w broken in the tensile test at the tensile speed of 50 mm/min with the specified spacing L set to 30 mm was less than a reference value Rx, the evaluation result in the specified bending test was that the steel wire 6w was cracked or broken and the bending performance was poor (unacceptable). In other words, it was found that when the value of the reduction R (%) of the broken steel wire 6w was the reference value Rx or more, the evaluation result in the specified bending test was that the steel wire 6w was not cracked or broken and the bending performance was excellent (acceptable). That is, it was found that the evaluation result by the specified bending test of the steel wire 6w was accurately obtained based on the magnitude of the value of the reduction R (%) in the tensile test under such conditions.

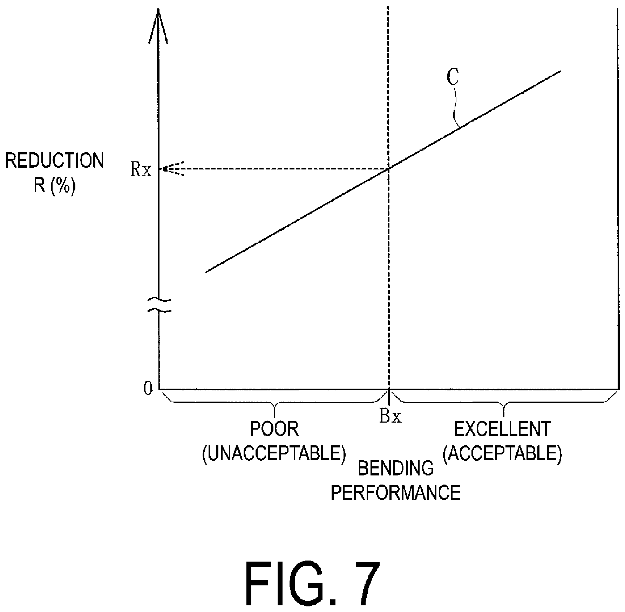

Specifically, as a result of various studies by the present inventor, a high correlation (correlation data C) was found between the value of the above-described reduction R and the evaluation result (bending performance) by the specified bending test, as illustrated in FIG. 7. The horizontal axis of FIG. 7 indicates the superiority or inferiority of the bending performance of the steel wire 6w. It is meant that in the region on one side (left side in FIG. 7) from a boundary Bx, the bending performance is poor and a crack or a wire breakage occurs in the steel wire 6w as a result of performing the specified bending test. The smaller the value of the reduction R is, the larger the number and size of cracks generated tend to be. In the region on one side from the boundary Bx, the bending performance is lower (the bending performance is more deteriorated) as the distance from the boundary Bx increases. It is meant that in the region on the other side (right side in FIG. 7) from the boundary Bx, the bending performance is excellent and no crack or wire breakage occurs in the steel wire 6w as a result of performing the specified bending test.

In order to obtain the correlation data C indicated by the solid line in FIG. 7, the specified bending test and the above-described tensile test are performed on a large number of steel wires 6w having different values of the reduction R. When the evaluation result in the specified bending test is unacceptable, the value of the reduction R of the steel wire 6w grasped by the tensile test is plotted at a position corresponding to the degree of inferiority in the bending performance in the unacceptable region. As a result, the correlation data C indicated by a solid line in a region on one side from the boundary Bx in FIG. 7 are obtained. When the evaluation result in the specified bending test is acceptable, it is sufficient that the value of the reduction R of the steel wire 6w grasped by the tensile test be plotted in the acceptable region. However, since the position on the horizontal axis is not determined, the correlation data C indicated by the solid line in the region on one side from the boundary Bx in FIG. 7 are extended to the region on the other side from the boundary Bx with the same gradient.

As indicated in FIG. 7, the boundary between a case where a crack or a wire breakage occurs in the steel wire 6w (unacceptable) when a specified bending test is performed and a case where no crack or wire breakage occurs (acceptable) is the boundary Bx. Thus, the value of the reduction R corresponding to the intersection between the correlation data C and the boundary Bx of the bending performance in FIG. 7 is calculated as the reference value Rx. It was found that the reference value Rx was 37 (%) when the outer diameter of the steel wire 6w was 5 mm or more and 15 mm or less.

When the value of the reduction R grasped in the above-described tensile test is the reference value Rx or more, it can be estimated that the evaluation result is acceptable if the specified bending test is performed on the steel wire 6w. On the other hand, when the value of the reduction R grasped in the above-described tensile test is less than the reference value Rx, it can be estimated that the evaluation result is unacceptable if the specified bending test is performed on the steel wire 6w.

Thus, in the method for evaluating the bending performance of a steel wire according to the present invention, when evaluating the bending performance of the steel wire 6w that is single and has an outer diameter of 5 mm or more, a tensile test is performed under the above-described conditions to grasp the value of the reduction R of the broken steel wire 6w. Then, a comparison is made between the grasped value of the reduction R and a preset reference value Rx of the reduction to evaluate the bending performance of the steel wire 6w.

Since the value of the reduction R by the above-described tensile test is highly correlated with the evaluation result of the bending performance by the specified bending test, the bending performance of the steel wire 6w can be accurately evaluated based on the comparison between the grasped value of the reduction R and the reference value Rx. In order to evaluate the bending performance, it is sufficient that a tensile test be performed instead of the specified bending test, which is very advantageous in easily grasping the bending performance of the steel wire 6w.

When the specified spacing L in the above-described tensile test is too large, the correlation between the value of the reduction R and the evaluation result (bending performance) by the specified bending test is low (the correlation is lost). Thus, it is considered that setting the specified spacing L to be very small at 30 mm greatly contributes to accurately reflecting the evaluation result (bending performance) by the specified bending test.

The steel wire 6w of the present invention is a single steel wire having an outer diameter of 5 mm or more, and the above-described reduction R is 37% or more. When the steel wire 6w is used in the marine hose 1 as a reinforcing wire embedded to extend spirally on the outer circumferential side of the flow path 1a, as in the embodiment illustrated in FIGS. 1 to 3, the outer diameter is set to 5 mm or more and 15 mm or less. Further, it is desirable that the tensile strength should be 900 MPa or more and 1300 MPa or less. By making the steel wire 6w have such specifications, the bending performance required for the marine hose 1 can be easily ensured without excess or deficiency. When the value of the reduction R of the steel wire 6w is excessively large, the bending rigidity is reduced, and the marine hose 1 is likely to be bent during use and is likely to be damaged. Thus, the upper limit value of the reduction R is 50%, for example.

In order to set the reduction R of the steel wire 6w to a desired value, for example, at least one of the following factors may be adjusted: the carbon content of the steel wire 6w; the cooling rate at which the wire is hot-rolled during the manufacture of the steel wire 6w; and the rate of change between the outer diameter of the wire and the outer diameter of the steel wire 6w (i.e., the rate of change between the outer diameters of the wire before and after drawing by hot rolling). By adjusting these factors, the tensile strength of the steel wire 6w can also be changed. In order to obtain an excellent bending performance with the value of the reduction R set to 37%, the carbon content of the steel wire 6w is 0.37 wt% or more and 0.77 wt% or less.

When the outer diameter of the steel wire 6w is more than 15 mm, the reference value Rx does not necessarily become 37%, but the reference value Rx does not largely change from 37%. Therefore, even when the outer diameter of the steel wire 6w is more than 15 mm, the superiority or inferiority of the bending performance of the steel wire 6w can be evaluated by setting the reference value Rx to 37%.

### Example

As indicated in Table 1, six test samples (Examples 1 to 3 and Comparative Examples 1 to 3) of steel wires having different specifications were prepared. Using each test sample, the bending performance was evaluated by performing the specified bending test illustrated in FIG. 4, and the value of the reduction R and the tensile strength were measured by performing the tensile test illustrated in FIGS. 5 and 6. The test results are as indicated in Table 1.

Each steel wire is a single wire made of carbon steel. The wire diameter in Table 1 is the outer diameter of the wire before manufacturing the steel wire, and the wire is subjected to hot rolling at different cooling rates including a medium speed (standard speed) and a high speed and a low speed which are higher or lower than the medium speed by about 10%.

In the evaluation results of the bending test in Table 1, when the appearance of the test sample after the bending test is observed, the bending performance is determined to be poor (unacceptable) and indicated by × when a crack or a wire breakage occurs, and, the bending performance is determined to be excellent (acceptable) and indicated by ∘ when no crack or wire breakage occurs in the appearance.

**[Table 1]**

| | Example | | | Comparative Example | | |
|---|---|---|---|---|---|---|
| | 1 | 2 | 3 | 1 | 2 | 3 |
| Material | Carbon steel | | | | | |
| Carbon content (wt%) | 0.42 | ← | 0.45 | ← | 0.72 | 0.82 |
| Wire diameter (mm) | 15.0 | 14.3 | 8.0 | 15.0 | ← | 8.0 |
| Cooling rate for hot rolling of wire | High speed | Medium speed | High speed | Low speed | Medium speed | ← |
| Outer diameter (mm) | 12.0 | ← | 6.0 | 12.0 | ← | 6.0 |
| Reduction R (%) | 43.4 | 40.6 | 42.0 | 31.7 | 30.1 | 35.4 |
| Tensile strength (MPa) | 995 | 955 | 1080 | 920 | 1220 | 1310 |
| Evaluation results in bending test | ○ | ○ | ○ | × | × | × |

From the results of Table 1, it can be seen that in Examples 1 to 3 in which the value of the reduction R is 37% or more, the evaluation results in the specified bending test are excellent (acceptable). Meanwhile, it can be seen that in Comparative Examples 1 to 3 in which the value of the reduction R is less than 37%, the evaluation results in the specified bending test are poor (unacceptable).

### Reference Signs List

1 Marine hose
1a Flow path
2 Connecting end portion
2a Flange
2b Nipple
2c Fixing ring
3 Main hose body
4 Inner surface layer
5 Inner first reinforcing layer group
5a Nipple wire
6 Inner second reinforcing layer group
6w Steel wire (reinforcing wire)
6a Nipple wire
7 Outer reinforcing layer group
7a Nipple wire
8 Buoyant layer
9 Cover layer
10 Tensile Tester
11 Holding tool
12 Bending tester
13 Holding tool
14 Bending portion
F Fluid

## Claims

1. A steel wire that is single and has an outer diameter of 5 mm or more,
a reduction of the steel wire held by a pair of holding tools at specified spacing from each other in a longitudinal direction and broken in a tensile test performed under conditions below being 37% or more:
the specified spacing is 30 mm, a tensile speed is 50 mm/min, a temperature is room temperature, the reduction (%) is a value calculated by {(S0 - S1)/S1} × 100, S0 is a cross-sectional area (mm) of the steel wire before the tensile test, and S1 is a cross-sectional area (mm) of a broken surface of the steel wire after the tensile test.

2. The steel wire according to claim 1, wherein an outer diameter of the steel wire is 15 mm or less, and a tensile strength of the steel wire in the tensile test is 900 MPa or more and 1300 MPa or less.

3. A marine hose in which the steel wire according to claim 2 is embedded as a reinforcing wire to extend spirally on an outer circumferential side of a flow path.

4. A method for evaluating bending performance of a steel wire that is single and has an outer diameter of 5 mm or more, the method comprising
holding the steel wire using a pair of holding tools at specified spacing from each other in a longitudinal direction, performing a tensile test under conditions below, and evaluating the bending performance of the steel wire on a basis of a comparison between a value of a reduction of the steel wire that has been broken and a preset reference value:
the specified spacing is 30 mm, a tensile speed is 50 mm/min, a temperature is room temperature, the reduction (%) is a value calculated by {(S0 - S1)/S1} × 100, S0 is a cross-sectional area (mm) of the steel wire before the tensile test, and S1 is a cross-sectional area (mm) of a broken surface of the steel wire after the tensile test.
